# EUROPÄISCHE PATENTSCHRIFT

(11) **EP 0 890 555 B1**
(45) Veröffentlichungstag und Bekanntmachung des Hinweises auf die Patenterteilung: **13.09.2000**
(21) Anmeldenummer: 98112274.0
(22) Anmeldetag: 02.07.1998
(51) Int. Cl.: C03C 1/02, C03B 19/10

(54) **Verfahren zur Herstellung von SiO2-Granulat**
Method of forming SiO2 granulate
Méthode de production de granulés de SiO2

(30) Priorität: 10.07.1997 DE 19729505
(43) Veröffentlichungstag der Anmeldung: 13.01.1999
(73) Patentinhaber: Heraeus Quarzglas GmbH & Co. KG, 63450 Hanau (DE)
(72) Erfinder: Köppler, Rainer Dr., 63500 Seligenstadt (DE); Kreis, Fritz-Ulrich, 63571 Gelnhausen (DE); Arnold, Klaus, 63457 Hanau (DE)

(56) Entgegenhaltungen:
- EP-A- 0 607 653
- EP-A- 0 692 524
- DD-A- 297 801
- US-A- 4 042 361
- US-A- 4 126 422

## Beschreibung

Die Erfindung betrifft ein Verfahren zur Herstellung von SiO₂-Granulat durch Dispergieren von Kieselsäure in einer Flüssigkeit, Rühren der Dispersion in einem Rührbehälter unter Bildung einer homogenen Flüssigphase, allmählichem Entzug von Feuchtigkeit aus der Dispersion unter Erzeugung einer körnigen Masse, sowie Trocknen der körnigen Masse und Sintern.

Feinteilige Kieselsäure wird beispielsweise durch Hydrolyse von Siliziumhalogeniden oder von siliziumorganischen Verbindungen, oder mittels Sol-Gel-Verfahren erhalten. Kieselsäure mit einer hohen spezifischen Oberfläche im Bereich zwischen 40 m²/g und ca. 400 m²/g fällt beispielsweise bei der Herstellung von synthetischem Quarzglas auch als Nebenprodukt in großen Mengen an. Die Weiterverwertung ist aber problematisch. Zwar zeichnen sich derartige Kieselsäure-Stäube durch hohe Reinheit aus; sie lassen sich wegen ihrer geringen Schüttdichte aber nur schwer handhaben und sie können nicht unmittelbar zu durchsichtigen, blasenarmen Quarzglaskörpern aufgeschmolzen werden. Zu diesem Zweck ist eine Verdichtung der Kieselsäure-Stäube erforderlich. Hierzu sind sogenannte Naßgranulierungsverfahren gebräuchlich, bei denen aus einer kolloidalen Dispersion derartiger Kieselsäuren durch ständiges Mischen oder Rühren ein Sol und daraus unter allmählichem Entzug der Feuchtigkeit eine krümelige Masse erzeugt wird.

Unter einer kolloidalen Dispersion wird hier eine Verteilung fester Kieselsäureteilchen (SiO₂-Teilchen) in einer Flüssigkeit verstanden, wobei deren mittlere Teilchengröße im Bereich von 1 nm bis 1000 nm liegt. Derartige Kieselsäureteilchen werden nicht nur durch das oben genannte Flammhydrolyse-Verfahren erhalten, sondern auch durch Hydrolyse organischer Siliziumverbindungen nach dem sogenannten Sol-Gel-Verfahren oder durch Hydrolyse anorganischer Siliziumverbindungen in einer Flüssigkeit. Durch Zusammenlagerungen der feinteiligen Kieselsäure-Teilchen bilden sich bei der Weiterverarbeitung der Dispersion Agglomerate mit größerem Durchmesser. Derartige kolloidale Dispersionen aus Kieselsäure-Teilchen zeigen aufgrund der Wechselwirkungskräfte zwischen den Teilchen üblicherweise ein Fließverhalten, das als Strukturviskosität oder Pseudoplastizität bezeichnet wird. Gleichzeitig ist die Dispersion thixotrop. Die Thixotropie äußert sich in einer scheinbaren zeitweiligen Abnahme der Viskosität der Dispersion bei Scherbeanspruchung.

In einem gattungsgemäßen Verfahren gemäß der DE-A1 44 24 044 wird vorgeschlagen, eine wäßrige Suspension pyrogen hergestellten Kieselsäurepulvers in einem Mischbehälter mit rotierendem Wirblerwerkzeug zu behandeln, dessen Umfangsgeschwindigkeit während einer ersten Mischphase auf einen Wert im Bereich von 15 m/s bis 30 m/s, und in einer zweiten Mischphase auf 30 m/s oder mehr eingestellt wird. In der ersten Mischphase beträgt der Feststoffgehalt der Suspension mindestens 75 Gew.-%, woraus nach der ersten Mischphase eine körnige Masse mit einem mittleren Korndurchmesser von weniger als 4 mm entsteht. Der Verdichtungsgrad der körnigen Masse wird weiter erhöht, indem amorpher Kieselsäurestaub hinzugegeben und in der zweiten Mischphase die körnige Masse unter intensiver Misch- und Schlagbeanspruchung zerkleinert wird. Dabei tritt gleichzeitig Wasser aus der Oberfläche der körnigen Masse aus, das durch Zugabe von weiterem Kieselsäurepulver.abgepudert wird, um ein Verkleben der Körnung zu verhindern.

Das bekannte Verfahren führt zu einem rieselfähigen SiO₂-Granulat mit hoher Schüttdichte, allerdings mit unregelmäßiger Morphologie der Körnung und mit einer breiten und inhomogenen Porengößenverteilung im ungesinterten Zustand. Es hat sich gezeigt, daß ein derartiges Granulat für die Herstellung von transparenten Quarzglasprodukten nicht uneingeschränkt geeignet ist.

Der Erfindung liegt daher die Aufgabe zugrunde, ein Verfahren für die Herstellung von hochreinem, homogenem und dichtem Granulat bereitzustellen, das im wesentlichen aus sphärischen Partikeln mit einheitlicher Morphologie besteht.

Diese Aufgabe wird erfindungsgemäß dadurch gelöst, daß durch fortwährendes Rühren die homogene Flüssigphase gerade so lange aufrechterhalten wird, bis sich daraus bei einem Feststoffgehalt der Dispersion im Bereich von 65 Gew.-% bis 80 Gew.-% die körnige Masse bildet.

Bei dem erfindungsgemäßen Verfahren werden die strukturviskosen und thixotropen Eigenschaften der Dispersion zur gezielten Einstellung der Restfeuchte beim Zerfallen der Dispersion in die körnige Masse ausgenutzt. Hierzu wird durch fortwährendes Rühren der Dispersion die homogene Flüssigphase gerade so lange aufrechterhalten, bis der Feststoffgehalt im Bereich von 65 Gew.-% bis 80 Gew.-% liegt. Die Flüssigphase könnte zwar durch eine stärkere Rührbewegung auch noch länger aufrecht erhalten, oder durch eine langsamere Rührbewegung auch schneller in die körnige Masse überführt werden. Sowohl die eine, als auch die andere Verfahrensweise hätten aber Nachteile in Bezug auf Porosität, Morphologie oder Homogenität der so erzeugten Granulate. Es hat sich gezeigt, daß der Versuch einer Optimierung einer dieser Eigenschaften auf Kosten einer anderen gehen kann, wie dies nachfolgend näher erläutert wird. Ein Optimum im Hinblick auf alle genannten Eigenschaften des Granulates ergibt sich durch die erfindungsgemäße Verfahrensweise.

Einerseits wird bei einer gemäß der Erfindung eingestellten Rührbewegung die Dispersion ausreichend lange in einer homogenen Flüssigphase gehalten. Die homogene Flüssigphase führt zu einem schnellen Abbau von Stoff- oder Temperaturgradienten und gewährleistet so eine homogene Zusammensetzung der Dispersion, und insbesondere eine homogene Feuchtigkeitsverteilung. Während der Aufrechterhaltung der homogenen Flüssigphase wird der Dispersion fortlaufend Flüssigkeit entzogen. Es wird angenommen, daß das Granulat aus Agglomeraten entsteht, die sich während des Granulierverfahrens allmählich in der Flüssigphase bilden. Der Entzug von Feuchtigkeit führt zu einer fortlaufenden Verdichtung der sich bildenden Agglomerate.

Andererseits geht die Dispersion von ihrem Zustand der homogenen Flüssigphase in ihren Zustand der körnigen Masse bei einem ausreichend hohen Feuchtigkeitsgehalt über. Denn ein hoher Feuchtigkeitgehalt erhöht die Plastizität der Dispersion und vermindert die mechanische Einwirkung des Rührwerkzeuges auf das Rührgut. Die sich bildenden Agglomerate könnten bei starker Schlag- und Scherbeanspruchung durch Rührwerkzeuge verändert oder beschädigt werden, woraus ein Granulat mit uneinheitlicher Morphologie resultieren würde. Bei dem erfindungsgemäßen Verfahren wird dies verhindert und gleichzeitig eine gleichmäßige Agglomerat-Bildung gefördert, indem die Rührbewegung so niedrig eingestellt wird, daß der Feststoffgehalt der Dispersion bei maximal 80 Gew.-% liegt. Die hierfür einzustellende Rührbewegung ist verhältnismäßig schwach, so daß das Rührgut durch das Rührwerkzeug wenig beeinträchtigt wird. Agglomerate können sich im wesentlichen unbeeinflußt vom Rührwerkzeug gleichmäßig aus der homogenen Flüssigphase bilden. Dadurch wird eine einheitliche, sphärische Morphologie der daraus entstehenden Granulat-Partikel erreicht. Die Porengrößenverteilung ist schmal und weist nur ein Maximum auf.

Die einheitliche Morphologie und die homogene Dichte der einzelnen Granulat-Partikel führt wiederum dazu, daß die einzelnen Partikel ähnliche thermische Eigenschaften, beispielsweise eine ähnliche Sintertemperatur oder Wärmeleitfähigkeit, aufweisen. Dies vereinfacht nicht nur das Sintern der einzelnen Partikel, sondern es erleichtert auch deren Einschmelzen zu einem homogenen, blasenfreien Quarzglaskörper. Unter sphärischen Partikeln werden im wesentlichen kugelförmig ausgebildete Partikel verstanden.

Bei einer krümeligen Masse mit einem Feststoffgehalt von mehr als 80 Gew.-% besteht die Gefahr, daß die Bildung von Agglomeraten in der homogenen Flüssigphase, aus denen letztlich die Granulate entstehen, sowohl aufgrund der dann erforderlichen höheren Rührbewegung als auch aufgrund der dann geringeren Plastizität der Dispersion erschwert wird und die sich bildenden Agglomerate beschädigt werden. Bei einem niedrigeren Feststoffgehalt als 65 Gew.-% besteht hingegen die Gefahr, daß die resultierenden Granulate eine geringe spezifische Dichte sowie eine inhomogene Zusammensetzung und Dichteverteilung aufweisen.

Für das Rühren der Dispersion können die bekannten Verfahren eingesetzt werden, beispielsweise kann die Rührbewegung durch Ultraschall bewirkt werden. Üblicherweise wird die Rührbewegung durch ein Rührwerkzeug erzeugt, wobei sich dann die zur Einhaltung der genannten Restfeuchte einzustellende Rührbewegung im wesentlichen aufgrund der Rührgeschwindigkeit des Rührwerkzeuges ergibt. Eine geeignete Rührgeschwindigkeit hängt von der Art des verwendeten Rührwerkzeuges ab und läßt sich anhand weniger Versuche ermitteln. Durch ein fortwährendes Rühren wird die Dispersion homogenisiert. Darunter wird auch ein Rührvorgang mit Unterbrechungen verstanden, sofern sich nach dem Fortsetzen des Rührvorgangs eine homogene Flüssigphase wieder einstellt. Auf den Zusatz eines Bindemittels kann bei dem erfindungsgemäßen Verfahren verzichtet werden.

Unter eine kolloidalen Dispersion im Sinne der Erfindung wird eine Dispersionen verstanden, bei der Kieselsäure durch Hydrolyse von Siliziumverbindungen in der Gasphase oder in der Flüssigphase oder nach dem sogenannten Sol-Gel-Verfahren durch Hydrolyse organischer Siliziumverbindungen hergestellt wird.

Als besonders vorteilhaft hat es sich erwiesen, durch fortwährendes Rühren die homogene Flüssigphase gerade so lange aufrechtzuerhalten, bis sich daraus bei einem Feststoffgehalt der Dispersion im Bereich von 75 Gew.-% bis 80 Gew.-% die körnige Masse bildet. Der Übergang von der homogenen Flüssigphase in die kömige Masse findet demnach bevorzugt bei einem Feuchtigkeitsgehalt im Bereich zwischen 20 Gew.-% und 25 Gew.-% statt.

Besonders gute Ergebnisse werden erzielt, wenn für das Rühren ein Rührbehälter mit einer zur Vertikalen geneigten Mittelachse eingesetzt wird, in dem ein Rührwerkzeug rotiert. Aufgrund der Neigung des Rührbehälters sammelt sich die flüssige Dispersion am tiefsten Punkt, wo sie fortlaufend dem Rührwerkzeug zugeführt wird. Dadurch wird die Dispersion in ständiger Bewegung gehalten; tote Winkel werden weitgehend vermieden. Die Aufrechterhaltung der homogenen Flüssigphase wird durch den gleichmäßigen Energieeintrag in die Dispersion gewährleistet, wobei die schonende Rührbewegung die Bildung von Agglomeraten in der Dispersion möglichst wenig beeinträchtigt.

Vorteilhafterweise rotiert der Rührbehälter gegensinnig zum Rührwerkzeug. Dadurch wird eine besonders intensive und dennoch schonende und homogene Durchmischung der Dispersion erreicht.

Es wird eine Verfahrensweise bevorzugt, bei der für das Rühren ein mit einem Antrieb versehenes Rührwerkzeug eingesetzt wird, wobei eine mit der Leistungsaufnahme des Antriebs korrelierbare elektrische Meßgröße überwacht und der Antrieb bei Erreichen eines vorgegebenen Grenzwertes seiner Leistungsaufnahme abgeschaltet wird. Als Bemessungsregel für das Einstellen der Rührbewegung kann die Leistungsaufnahme des Antriebes für das Rührwerkzeug herangezogen werden. Denn der Übergang der homogenen, flüssigen Dispersion in eine krümelige Masse geht mit einem signifikanten Anstieg des Rührwiderstandes und damit einem signifikanten Anstieg der Leistungsaufnahme des Rührwerkzeuges einher. Ein Anstieg des Rührwiderstandes in strukturviskosen Dispersionen bei gleichbleibender Rührbewegung kann auf zunehmendem Feststoffgehalt der Dispersion beruhen. Bei allmählich zunehmendem Feststoffgehalt der Dispersion ist bei einem bestimmten "Grenz-Feststoffgehalt", bei dem sich aus der homogenen, flüssigen Dispersion die körnige Masse bildet, ein signifikanter Anstieg des Rührwiderstandes festzustellen. Aufgrund der Thixotropie hängt der Wert des "Grenz-Feststoffgehaltes" wiederum von der Stärke der Rührbewegung ab. Erfindungsgemäß ist die Rührbewegung so einzustellen, daß der Anstieg des Rührwiderstandes bei einem Feststoffgehalt im Bereich zwischen 65 Gew.-% und 80 Gew.-%, vorzugsweise bei 75 Gew.-% bis 80 Gew.-%, liegt.

Nach dem Abschalten des Antriebes wirkt das Rührwerkzeug auf die Dispersion bzw. auf die sich daraus bildenden Granulate nicht mehr wesentlich mechanisch ein. Beschädigungen des Granulats und Beeinträchtigungen der gewünschten einheitlichen Morphologie werden dadurch vermieden.

Dabei hat es sich als günstig erwiesen, den Antrieb nach mindestens einer Verdoppelung der Leistungsaufnahme innerhalb eines vorgegebenen Zeitintervalls abzuschalten. Als Zeitintervall kommen beispielsweise 30 Minuten in Frage.

Besonders bevorzugt wird eine Verfahrensweise, bei der der Dispersion ein Dotiermittel zugesetzt wird. Das erfindungsgemäße Verfahren erlaubt eine besonders homogene Verteilung von Dotiermitteln in der homogenen Flüssigphase und damit auch im Granulat.

Ein besonders vorteilhaftes Fließverhalten zeigt eine Dispersion, deren pH-Wert im Bereich zwischen 1 und 5 eingestellt wird. Das Fließverhalten wird dadurch so beeinflußt, daß der Übergang von der Flüssigphase in die körnige Masse mit dem oben genannten Feststoffgehalt erleichtert wird.

Vorteilhafterweise wird dem Rührbehälter während des Rührens ein vorgewärmtes, trockenes Gas zugeführt. Das vorgewärmte, trockene Gas dient dem allmählichen Entzug von Feuchtigkeit aus der Dispersion. Unter einem trockenen Gas wird dabei ein Gas verstanden, dessen relative Feuchte bei der im Rührbehälter eingestellten Temperatur unterhalb des Kondensationspunktes liegt. Durch die Umwälzung der Dispersion im Rührbehälter wird dem trockenen Gasstrom ständig neue Oberfläche ausgesetzt.

Es hat sich bewährt, für das Rühren der Dispersion einen Stiftwirbler einzusetzen. Unter einem Stiftwirbler wird dabei ein Rührwerkzeug verstanden, das mit mehreren länglichen Stiften versehen ist, deren Längsachse jeweils koaxial oder im wesentlichen koaxial zur Roatitionsachse des Rührwerkzeuges verläuft. Der Bewegungsverlauf der Stifte beim Rühren der Dispersion beschreibt koaxiale Hüllkreise um die Rotationsachse. Der Einsatz eines solchen Stiftwirblers erleichtert die Aufrechterhalltung der homogenen Mischphase. Um eine möglichst geringe Porendichte und eine homogene Porenverteilung im Granulat zu erzielen, ist darauf zu achten, daß beim Rühren der Dispersion möglichst wenig neue Oberfläche im Mischgut erzeugt wird. Das heißt, es wird vorteilhafterweise so langsam gerührt, daß es nicht zu einer Blasenbildung im Bereich des Rührwerkzeuges kommt. Auch im Hinblick hierauf hat sich der Einsatz eines Stiftwirblers bewährt.

Das erfindungsgemäß hergestellte Granulat ist als Ausgangsmaterial zum Ziehen von Quarzglaskörpern aus einem Tiegel geeignet. Es wurde gefunden, daß das Granulat für diese Verwendung nicht dicht gesintert oder vollständig verglast sein muß; ein Sintern des Granulats bei einer Temperatur von unterhalb 1200 °C ist ausreichend. Dieser Effekt kann auf die einheitliche Morphologie des Granulates zurückgeführt werden, die ein Sintern der Granulat-Partikel oder deren Erschmelzen erleichtert. Dadurch kann die zum Dichtsintern oder vollständigen Verglasen erforderliche kostenintensive Hochtemperaturbehandlung entfallen. Diese besondere Einsatzmöglichkeit kann auf der hohen Dichte und der einheitlichen Morphologie des erfindungsgemäß hergestellten Granulates beruhen.

Gleichermaßen kann das erfindungsgemäß hergestellte Granulat als Ausgangsmaterial zum Herstellen von Quarzglastiegeln, zum Beispiel unter Einsatz des Einstreuverfahren, verwendet werden. Das Einstreuverfahren ist beispielsweise in der DE-A1 29 28 089 beschrieben. Das Granulat muß auch für diese Verwendung weder dicht gesintert, noch vollständig verglast sein; ein Sintern des Granulats bei einer Temperatur von unterhalb 1200 °C ist ausreichend.

Nachfolgend wird die Erfindung anhand eines Ausführungsbeispieles und einer Patentzeichnung näher erläutert. In der Zeichnung zeigen im einzelnen
- **Figur 1**: in schematischer Darstellung, einen Intensivmischer für den Einsatz beim erfindungsgemäßen Verfahren, in dreidimensionaler Ansicht,
- **Figur 2**: in schematischer Darstellung, einen Stiftwirbler, wie er im Intensivmischer gemäß Figur 1 eingesetzt wird, in einem Schnitt, und
- **Figur 3**: eine Meßkurve über den zeitlichen Verlauf der Leistungsaufnahme eines elektrischen Antriebes einer Rührvorrichtung während des erfindungsgemäßen Granulier-Verfahrens.

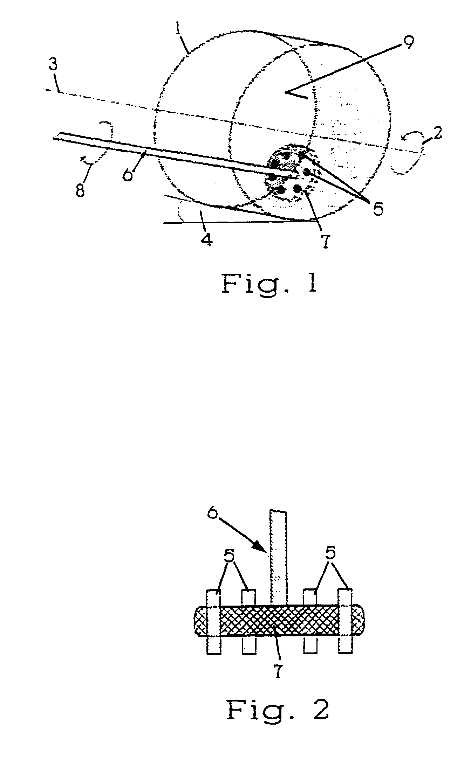

Zur Granulierung wird ein Intensivmischer Typ R der Maschinenfabrik Gustav Eirich eingesetzt, wie er in **Figur 1** schematisch dargestellt ist. Der Intensivmischer umfaßt eine mit Kunststoff ausgekleidete, um ihre Mittelachse 3 rotierende Rührkammer 1. Die Rotationsrichtung der Rührkammer 1 wird durch den Richtungspfeil 2 angezeigt. Die Mittelachse 3 der Rührkammer 1 verläuft dabei in Bezug auf die Waagerechte mit einem Neigungswinkel 4 von 30°. In die Rührkammer 1 ragt ein rotierender Stiftwirbler 6, der im wesentlichen in Form einer kreisrunden, an seiner dem Boden 9 der Rührkammer 1 zugewandten Unterseite mit Stiften 5 versehenen Scheibe 7 ausgebildet ist. Wie der Richtungspfeil 8 andeutet, rotiert der Stiftwirbler 6 gegensinnig zur Rührkammer 1 und er ist in Bezug auf deren Mittelachse 3 asymmetrisch darin angeordnet. Die dem Rührgut zugewandten Oberflächen von Rührkammer 1 und Stifwirbler 6 bestehen entweder aus Kunststoff oder aus Quarzglas.

In die Rührkammer 1 wird eine kolloidale Dispersion von hochreinem, pyrogen hergestelltem SiO₂- Staub und entionisiertem Wasser gegeben. Die Anfangsfeuchte der Dispersion beträgt 45 Gew.-%, ihr anfänglicher Feststoffgehalt somit 55 Gew.-%. Zur Einstellung eines pH-Wertes um 2 wird der Dispersion Salzsäure zugesetzt. Zusätzliche Bindemittel enthält die Dispersion nicht.

In der schematischen Darstellung von **Figur 2** sind Einzelheiten des in der Rührvorrichtung nach Figur 1 eingesetzten Stiftwirblers 6 deutlicher erkennbar. Es sind eine Vielzahl länglicher Stifte 5 aus Quarzglas am Umfang der kreisrunden Scheibe 7 aus Polyethylen gleichmäßig verteilt angeordnet. Dabei werden die Stifte in der Scheibe 7 so gehalten, daß sie beiderseits der planen Oberflächen der Scheibe 7 abstehen, wobei die Längsachse jedes Stiftes 5 parallel zum Schaft des Stiftwirblers 6 verläuft.

Nachfolgend wird ein Ausführungsbeispiel für das erfindungsgemäße Verfahren unter Einsatz einer Rührvorrichtung, wie sie in den Figuren 1 und 2 schematisch dargestellt ist, näher erläutert:

Nach einem etwa halbstündigen Homogenisierungsschritt, bei der der Stifwirbler 6 mit einer Umdrehungsgeschwindigkeit von 320 U/min und die Rührkammer 1 dazu gegensinnig mit 10 U/min rotieren, setzt das eigentliche Granulierverfahren ein. Hierzu wird die Rotationsgeschwindigkeit des Stiftwirblers 6 auf einen relativ niedrigen Wert von 30 U/min herabgesetzt und die Rotationsgeschwindigkeit und -richtung der Rührkammer 1 wird mit 10 U/min beibehalten. Aufgrund der so eingestellten Rührbewegung wird eine homogene Flüssigphase erzeugt, in der Stoffaustauschvorgänge rasch ablaufen. Zur allmählichen und schonenden Trocknung der Dispersion wird der Rührkammer 1 kontinuierlich ein auf etwa 100 °C erwärmter und trokkener Stickstoffstrom zugeführt und wieder abgesaugt. Aufgrund der eingestellten Rotationsgeschwindigkeiten von Stiftwirbler 6 und Rührkammer 1 gelingt es, die homogene Flüssigphase bis zu einem Feuchtigkeitsgehalt im Bereich zwischen 22 Gew.-% und 25 Gew.-%. aufrechtzuerhalten.

Um das Ende des Granulierverfahrens erkennen zu können, wird während des Granulierens die Leistungsaufnahme des Motors für den Stiftwirbler 6 überwacht. Der Motor wird abgeschaltet, wenn innerhalb einer Zeitspanne von 30 Minuten eine Verdopplung der Leistungsaufnahme gemessen wird. Dies ist immer dann der Fall, wenn aus der Dispersion eine körnige Masse entsteht. Die körnige Masse hat eine Restfeuchte im Bereich zwischen 22 Gew.-% und 25 Gew.-%. Bei einer schnelleren Rotationsgeschwindigkeit von Stiftwirbler 6 oder Rührkammer 1 wird ein Granulat mit einer geringeren Restfeuchte, bei einer langsameren Rotationsgeschwindigkeit ein Granulat mit einer höheren Restfeuchte erhalten.

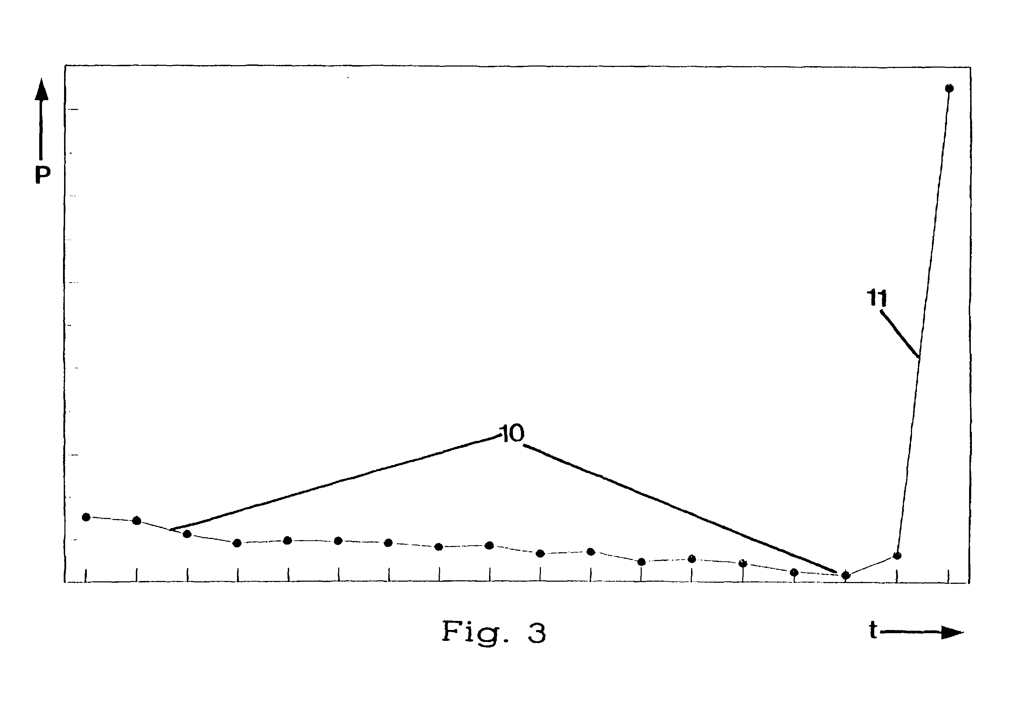

Der zeitliche Verlauf der Leistungsaufnahme des Motors des Stiftwirblers 6 während des Granulierverfahrens ist in **Figur 3** dargestellt. Auf der Ordinate ist die gemessene Leistungsaufnahme "P" in relativen Einheiten, und auf der Abszisse die Zeit "t" aufgetragen. Die Meßpunkte sind als schwarze Punkte eingezeichnet. Es ist zu erkennen, daß die Leistungsaufnahme des Motors zunächst auf niedrigem Niveau konstant bleibt (Bereich 10) und sogar mit der Zeit leicht abnimmt, und erst gegen Ende des Granulierverfahrens (Bereich 11) signifikant ansteigt. Der Anstieg erfolgt innerhalb weniger Minuten und er geht mit dem Übergang der homogenen Flüssigphase in die körnige Masse einher.

Das entsprechend dem erfindungsgemäßen Verfahren hergestellte Granulat besteht aus Körnern mit einer mittleren Korngröße bis etwa 1 mm. Die Körner zeichnen sich durch weitgehende Porenfreiheit, eine hohe Reinheit, eine einheitliche, im wesentlichen runde Kornmorphologie, durch eine hohe Schüttdichte von ca. 1 g/cm³ und durch eine enge Porengrößenverteilung aus. Die BET-Oberfläche des Granulats liegt bei 40 m²/g bis 60 m²/g. Diese Merkmale des erfindungsgemäß hergestellten Granulates und insbesondere seine einheitliche Kornmorphologie führen dazu, daß die einzelnen Partikel weitgehend ähnliches Sinter- oder Schmelzverhalten aufweisen. Dies erleichtert das Sintern oder Verglasen der Partikel und es vereinfacht das Einschmelzen des Granulats zur Erzeugung von Quarzglas- oder Quarzgut-Produkten.

Das Granulat wird anschließend aus der Rührkammer entnommen und - falls erforderlich - gesiebt. Eine Vortrocknung des Granulats erfolgt kontinuierlich in einem Drehrohrofen bei Temperaturen im Bereich zwischen 80 °C und 200 °C. In Abhängigkeit vom Einsatzzweck des Granultes wird es für die weitergehende Trocknung und Reinigung auf Temperaturen im Bereich von 200 °C bis zu 1200 °C gebracht. Dafür wird ein Drehrohrofen eingesetzt, der auch für eine Nachreinigung des Granulates geeignet ist. Für die Reinigung des Granulats wird der Drehrohrofen mit einem geeigneten, chlorhaltigen Reinigungsgas ( in der Regel ein HCl-/Chlor-Gemisch) durchströmt. Die Reinigung ist besonders effektiv, wenn alle Partikel des Granulats gleichmäßig vom Reinigungsgas umströmt werden und das Reinigungsgas-Volumen wesentlich größer ist als das Porenvolumen des Granulats. Es wird eine möglichst gleichmäßige und schnelle Bewegung des Granulats im Drehrohrofen eingestellt. Für hochreines Granulat können einzelne Reinigungsschritte wiederholt werden. Bei dem erfindungsgemäß hergestellten Granulat wird nur eine geringe Schrumpfung und Abnahme der BET-Oberfläche infolge der Hochtemperaturbehandlungen beobachtet.

Möglicher Abrieb durch Kunststoffbeschichtete Oberflächen werden in einem Kalzinierschritt entfernt, bei dem das Granulat unter sauerstoffhaltiger Atmosphäre auf Temperaturen im Bereich von 1000 °C bis 1200 °C erhitzt wird.

Anschließend wird das Granulat gesintert. Die Sintertemperaturen und -zeiten richten sich nach dem Einsatzzweck des Granulats. Zum vollständigen Verglasen wird das Granulat bei Sintertemperaturen um 1350 °C bis 1450 °C in einem Kammerofen behandelt. Das vollständig verglaste Granulat ist beispielsweise für die Herstellung von optischen Quarzglasbauteilen, wie Linsen oder Vorformen für Lichtwellenleiter geeignet.

Für einige Anwendungungen ist ein weniger dicht gesintertes Granulat ausreichend. Beispielsweise für die Herstellung opaker Quarzglasteile, wie sie in der Halbleiterindustrie eingesetzt werden, für Katalysatorträger oder als Füllsttoffe in der Elektroindustrie.

Bei einer Verwendung als Ausgangsmaterial zur Herstellung von Quarzglaskörpern durch Ziehen aus einem Schmelztiegel haben sich Sintertemperaturen um 1150 °C als ausreichend erwiesen. Das noch nicht dicht gesinterte Granulat wird dabei dem Schmelztiegel zugeführt und darin aufgeschmolzen, wobei ein vollständig transparentes Quarzglasprodukt, beispielsweise ein Halbzeug für ein Lampenrohr, resultiert. Dies ist nicht selbstverständlich; denn bei derartigen Verfahrensweisen werden mit den bekannten Granulaten schaumige Glasgegenstände erhalten. Gleichermaßen ist ein bei Temperaturen um 1150 °C gesintertes, erfindungsgemäß hergestelltes Granulat als Ausgangsmaterial zur Herstellung von Quarzglastiegeln geeignet.

## Patentansprüche

1. Verfahren zur Herstellung von SiO₂-Granulat durch Dispergieren von Kieselsäure in einer Flüssigkeit, Rühren der Dispersion in einem Rührbehälter unter Bildung einer homogenen Flüssigphase, allmählichem Entzug von Feuchtigkeit aus der Dispersion unter Erzeugung einer körnigen Masse, sowie Trocknen der körnigen Masse und Sintern, dadurch gekennzeichnet, daß durch fortwährendes Rühren die homogene Flüssigphase gerade so lange aufrechterhalten wird, bis sich daraus bei einem Feststoffgehalt der Dispersion im Bereich von 65 Gew.-% bis 80 Gew.-% die körnige Masse bildet.

2. Verfahren nach Anspruch 1, dadurch gekennzeichnet, daß durch fortwährendes Rühren die homogene Flüssigphase gerade so lange aufrechterhalten wird, bis sich daraus bei einem Feststoffgehalt der Dispersion im Bereich von 75 Gew.-% bis 80 Gew.-% die körnige Masse bildet.

3. Verfahren nach einem der vorherigen Ansprüche, dadurch gekennzeichnet, daß ein Rührbehälter mit einer zur Vertikalen geneigten Mittelachse eingesetzt wird, in dem ein Rührwerkzeug rotiert.

4. Verfahren nach Anspruch 3, dadurch gekennzeichnet, daß der Rührbehälter gegensinnig zum Rührwerkzeug rotiert.

5. Verfahren nach einem der vorherigen Ansprüche, dadurch gekennzeichnet, daß für das Rühren ein mit einem Antrieb versehenes Rührwerkzeug eingesetzt wird und daß eine mit der Leistungsaufnahme des Antriebs korrelierbare elektrische Meßgröße überwacht und der Antrieb bei Erreichen eines vorgegebenen Grenzwertes seiner Leistungsaufnahme abgeschaltet wird.

6. Verfahren nach Anspruch 5, dadurch gekennzeichnet, daß der Antrieb abgeschaltet wird, wenn sich seine Leistungsaufnahme innerhalb eines vorgegebenen Zeitintervalls mindestens verdoppelt hat.

7. Verfahren nach einem der vorherigen Ansprüche, dadurch gekennzeichnet, daß der Dispersion ein Dotiermittel zugesetzt wird.

8. Verfahren nach einem der vorherigen Ansprüche, dadurch gekennzeichnet, daß der pH-Wert der Dispersion zwischen 1 und 5 gehalten wird.

9. Verfahren nach einem der vorherigen Ansprüche, dadurch gekennzeichnet, daß dem Rührbehälter während des Rührens ein vorgewärmtes, trockenes Gas zugeführt wird.

10. Verfahren nach einem der vorherigen Ansprüche, dadurch gekennzeichnet, daß für das Rühren der Dispersion ein Stiftwirbler eingesetzt wird.

## Claims

1. Process for the preparation of SiO₂ granules by dispersing silicic acid in a liquid, stirring the dispersion in a stirred container with formation of a homogeneous liquid phase, gradually withdrawing moisture from the dispersion with production of a granular material, and drying the granular material and sintering, characterized in that, by continuous stirring, the homogeneous liquid phase is maintained just long enough for the granular material to form therefrom at a solids content of the dispersion in the range from 65% by weight to 80% by weight.

2. Process according to Claim 1, characterized in that, by continuous stirring, the homogeneous liquid phase is maintained just long enough for the granular material to form therefrom at a solids content of the dispersion in the range from 75% by weight to 80% by weight.

3. Process according to any of the preceding Claims, characterized in that a stirred container which has a central axis inclined relative to the vertical and in which a stirring tool is rotated is used.

4. Process according to Claim 3, characterized in that the stirred container is rotated in a direction opposite to that of the stirring tool.

5. Process according to any of the preceding Claims, characterized in that a stirring tool provided with a drive is used for the stirring, and that an electrical measured variable correlatable with the power consumption of the drive is monitored and the drive is switched off on reaching a predetermined limit of its power consumption.

6. Process according to Claim 5, characterized in that the drive is switched off when its power consumption has at least doubled within a predetermined time interval.

7. Process according to any of the preceding Claims, characterized in that a dopant is added to the dispersion.

8. Process according to any of the preceding Claims, characterized in that the pH value of the dispersion is kept between 1 and 5.

9. Process according to any of the preceding Claims, characterized in that a preheated, dry gas is fed to the stirred container during the stirring.

10. Process according to any of the preceding Claims, characterized in that a pin-type vortex stirrer is used for stirring the dispersion.

## Revendications

1. Procédé de production de granulé SiO₂ par dispersion d'acide silicique dans un liquide, agitation de la dispersion dans un récipient de mélange sous formation d'une phase liquide homogène, extraction progressive de l'humidité hors de la dispersion en générant une masse granuleuse, ainsi que séchage de la masse granuleuse et frittage, caractérisé en ce que par agitation continue, la phase liquide homogène est conservée juste assez longtemps pour que la masse granuleuse se forme pour une teneur en substance solide de la dispersion comprise entre 65 % en poids et 80 % en poids.

2. Procédé selon la revendication 1, caractérisé en ce que par agitation continue, la phase liquide homogène est conservée juste assez longtemps pour que la masse granuleuse se forme pour une teneur en substance solide de la dispersion comprise entre 75 % en poids et 80 % en poids.

3. Procédé selon l'une des revendications précédentes, caractérisé en ce qu'on utilise un récipient d'agitation avec un axe médian inclinée à la verticale dans lequel un outil agitateur tourne.

4. Procédé selon la revendication 3, caractérisé en ce que le récipient d'agitation tourne dans le sens inverse à l'outil agitateur.

5. Procédé selon l'une des revendications précédentes, caractérisé en ce que pour l'agitation on utilise un outil agitateur muni d'un entraînement et en ce qu'une grandeur de mesure électrique en corrélation avec la puissance absorbée de l'entraînement effectue un contrôle et que l'entraînement est déconnecté dés qu'il atteint une valeur limite prédéterminée de sa puissance absorbée.

6. Procédé selon la revendication 5, caractérisé en ce que l'entraînement est déconnecté quand sa puissance absorbée a au moins doublée à l'intérieur d'un intervalle de temps prédéterminé.

7. Procédé selon l'une des revendications précédentes, caractérisé en ce qu'on ajoute un agent de dopage à la dispersion.

8. Procédé selon l'une des revendications précédentes, caractérisé en ce que la valeur pH de la dispersion est maintenue entre 1 et 5.

9. Procédé selon l'une des revendications précédentes, caractérisé en ce qu'un gaz sec préchauffé est amené au récipient d'agitation pendant l'agitation.

10. Procédé selon l'une des revendications précédentes, caractérisé en ce que pour l'agitation de la dispersion., on utilise une broche tourbillonnante.
